(19) Europäisches Patentamt
European Patent Office
Office européen des brevets

(11) **EP 3 182 862 B1**

(12) **FASCICULE DE BREVET EUROPEEN**

(45) Date de publication et mention de la délivrance du brevet:
**19.09.2018 Bulletin 2018/38**

(51) Int Cl.:
*B05B 7/00* (2006.01)      *B05B 17/06* (2006.01)
*B05B 12/08* (2006.01)      *A47F 3/00* (2006.01)
*F24F 6/14* (2006.01)      *B60H 3/02* (2006.01)

(21) Numéro de dépôt: **15756678.7**

(22) Date de dépôt: **07.07.2015**

(86) Numéro de dépôt international:
**PCT/FR2015/051877**

(87) Numéro de publication internationale:
**WO 2016/009127 (21.01.2016 Gazette 2016/03)**

(54) **NÉBULISEUR COMPACT POUR RAFRAÎCHIR L'AIR**

KOMPAKTE VERNEBELUNGSVORRICHTUNG ZUM KÜHLEN VON LUFT

COMPACT NEBULIZER FOR COOLING THE AIR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.07.2014 FR 1456863**

(43) Date de publication de la demande:
**28.06.2017 Bulletin 2017/26**

(73) Titulaire: **ARECO FINANCES ET TECHNOLOGIE - ARFITEC**
**06130 Grasse (FR)**

(72) Inventeurs:
• **GSCHWIND, Michel**
**F-06130 Placassier (FR)**
• **RICHARD, Frédéric**
**F-06220 Golfe Juan (FR)**
• **SABRAOUI, Abbas**
**F-06130 Grasse (FR)**

(74) Mandataire: **Schmidt, Martin Peter**
**IXAS Conseil**
**15, rue Emile Zola**
**69002 Lyon (FR)**

(56) Documents cités:
**EP-A1- 0 691 162          WO-A1-2014/177805**
**FR-A1- 2 787 352          FR-A1- 2 788 706**
**US-A1- 2007 216 259          US-A1- 2008 223 953**
**US-A1- 2013 200 536**

EP 3 182 862 B1

**Description**

**Domaine technique de l'invention**

L'invention concerne les systèmes de nébulisation aptes à générer un brouillard de micro-gouttelettes d'un liquide, par exemple d'eau, dans le but de rafraîchir l'atmosphère, et plus particulièrement les systèmes de nébulisation de petite taille qui peuvent être montés sur un étal de vente pour humidifier et rafraîchir des produits frais exposés à la vente.

**Etat de la technique**

De tels systèmes sont connus en tant que tels. Le brevet EP 0 691 162, qui divulgue un dispositif selon le préambule de la revendication 1, décrit un système de nébulisation avec une buse de concentration dans laquelle un élément piézoélectrique immergé dans l'eau génère un brouillard de gouttelettes d'eau à la sortie d'une buse qui concentre les ultrasons générés par ledit élément piézo-électrique en son point de sortie ; le brouillard est ensuite emporté par un courant d'air généré par un ventilateur. Cette buse est en règle générale disposée verticalement, avec la sortie focalisante pointant vers le haut ; la buse peut aussi être inclinée, par exemple à 45°.

**Objet de l'invention**

Le but de l'invention est de présenter un dispositif de nébulisation amélioré, qui peut être utilisé pour humidifier et/ou rafraîchir des marchandises, notamment des produits frais, exposés à la vente sur un étal, ou encore pour humidifier et/ou rafraîchir et/ou parfumer l'atmosphère dans d'autres buts, par exemple pour refroidir et/ou rafraîchir et/ou parfumer (et/ ou désinfecter) un volume d'air, tel qu'un pièce d'habitation ou un habitacle de voiture, et qui est compact, robuste, fiable, bon marché et simple à utiliser, et qui est facile à maintenir, et dont la consommation en énergie soit aussi faible que possible.

L'exigence de compacité résulte du besoin d'une petite taille générale du dispositif, et en particulier d'une hauteur limitée, qui est particulièrement forte lorsque le dispositif doit être intégré dans un habitacle de véhicule ou sous une table ou étal. L'exigence de robustesse résulte du besoin de résistance du dispositif contre des conditions perturbées, et de son fonctionnement fiable dans des conditions perturbées, telles que les mouvements mécaniques (accélération, freinage, vibrations, chocs, variation de pente). Elle résulte également du souhait d'éviter une maintenance fréquente du nébuliseur. L'exigence de simplicité d'utilisation résulte notamment de l'impossibilité pratique de demander à l'utilisateur de veiller à l'approvisionnement régulier du nébuliseur en eau. L'exigence de légèreté résulte du besoin général de limiter la masse qui s'ajoute à un véhicule (et notamment à un aéronef) par l'ajout d'options et fonctions supplémentaires ; la légèreté facilite en tous les cas la maintenance quand il s'agit de manipuler le dispositif, et elle tend aussi à diminuer l'impact environnemental du dispositif. L'exigence d'une faible consommation d'énergie résulte du désir qui se généralise de diminuer l'impact environnemental des produits, dispositifs et machines dans leur cycle de vie. L'exigence de prix milite en faveur d'un dispositif de construction simple.

Le problème est résolu par un dispositif de construction nouvelle qui présente trois parties (modules):

(i) Un corps comportant le bac à eau ; ce corps constitue une partie inférieure de l'appareil.

(ii) Une partie supérieure comportant un tube de collecte du jet d'eau et un embout allongé à travers lequel s'échappe le brouillard généré par le système ; cette partie supérieure se pose sur le corps.

(iii) Un boitier électronique fixé au corps, de manière détachable ou non, et qui peut être ouvert et/ou escamoté pour faciliter la maintenance.

L'appareil selon l'invention est étroit et compact et peut être fixé sur des glissières au-dessous de la table ou de l'étal (il pourra aussi être fixé au-dessus de la table), et pourra être sorti et débranché facilement pour le poser sur une table ou un établi pour des travaux de maintenance.

Le bac à eau est amovible et peut être remplacé facilement.

Chacun des trois corps est de forme sensiblement allongé, avec l'axe longitudinal sensiblement parallèle à la direction de l'embout allongé par lequel s'échappe le brouillard / et ou à la direction du tube de collecte du jet d'eau.

Le dispositif comporte un tube de collecte apte et disposé à recueillir le jet de liquide sortant de l'orifice de sortie et à se vider dans ledit réservoir de collecte. Ce tube peut être incliné par rapport à la verticale. Ce tube de collecte peut être traversé par un flux d'air, qui emporte ledit brouillard de gouttelettes vers sa sortie. Cela diminue encore la hauteur du dispositif et simplifie sa construction.

Avantageusement le tube de collecte se prolonge dans l'embout allongé à travers lequel s'échappe le brouillard généré par le système.

Le dispositif selon l'invention comprend avantageusement des moyens de ventilation pour créer un flux d'air qui emporte ledit brouillard de gouttelettes vers l'extérieur dudit dispositif. Ce moyen de ventilation peut être localisé dans ladite parie supérieure. Dans un mode de réalisation avantageux, l'air entre dans le système à travers ledit moyen de ventilation, traverse le tube de collecte ou un tube dans lequel est inséré le tube de collecte, et quitte le système par ledit embout allongé.

Grâce à sa buse à focalisation d'ondes acoustiques générées par un élément piézo-électrique, le dispositif de nébulisation selon l'invention est apte à créer et répandre un brouillard formé de gouttelettes d'un diamètre moyen typique compris entre 0,5 $\mu$m et 25 $\mu$m, de préférence entre 1 $\mu$m et 10 $\mu$m, et encore plus préférentiellement entre 1 $\mu$m et 5 $\mu$m.

Ledit liquide à nébuliser est préférablement de l'eau, qui peut comporter des additifs, tels que des parfums et/ou des produits désinfectants (par exemple : $H_2O_2$, acide peracétique, acide citrique).

Ladite buse est disposée de préférence dans l'axe du tube de collecte, et donc de préférence légèrement inclinée par rapport à l'horizontale. Cela contribue diminuer la hauteur du dispositif.

Le dispositif selon l'invention convient en particulier pour des tables ou étals d'une superficie jusqu'à environ 5m$^2$ ou plus, mais on peut réaliser des modèles plus petits convenant pour des tables ou étals d'une superficie inférieure à environ 3 m$^2$.

D'une manière générale, ladite pompe de circulation peut être de tout type approprié ; une pompe centrifuge à hélice convient bien.

Le dispositif selon l'invention peut comporter également au moins un moyen de détection d'un manque de liquide associé à une boucle de rétroaction pour couper ou diminuer l'intensité des ondes acoustiques émises par l'élément piézo-électrique en cas de manque d'eau. Ce moyen de détection peut être un capteur (par exemple un capteur de niveau d'eau dans le réservoir primaire, et/ou un capteur de pression dans la chambre de mise en pression), ou une pluralité de capteurs, et/ou peut comprendre une mesure d'un paramètre électrique de la pompe de circulation.

Dans un mode de réalisation qui peut être combiné avec tous les autres, l'axe longitudinal de ladite buse forme un angle d'inclinaison $\alpha$ par rapport à l'horizontale qui se situe entre 0° et 45°, de préférence entre 0° et 30° et encore plus préférentiellement entre 5° et 20°. Cela permet une construction du dispositif particulièrement compacte.

Dans un mode de réalisation qui peut être combiné avec les précédents, le réservoir de collecte et ladite buse forment un seul bloc.

Avantageusement, la partie supérieure et le corps sont en plastique moulé (de manière préférée renforcé aux fibres de verre, par exemple à raison d'au moins 10% massiques, ou d'au moins 20% massiques, ou d'environ 30% massiques) ; cela permet une construction légère et néanmoins robuste, dans la logique d'une écoconception. La légèreté est avantageuse pour des appareils embarqués. Elle facilite également la maintenance si, comme c'est possible avec le dispositif selon l'invention, l'appareil est retiré intégralement de son lieu d'implantation (par exemple sous l'étal ou la table qu'il équipe).

Le plastique est de préférence un plastique apte au contact avec des aliments, afin de ne pas contaminer l'eau et le brouillard avec des traces de produits indésirables provenant des matériaux plastiques. De manière avantageuse on choisit un plastique recyclable.

Le dispositif peut comporter un moyen de chauffage apte à évaporer le liquide résiduel dans ledit dispositif, et notamment dans le bac, après son arrêt. Le même moyen de chauffage peut être utilisé pour chauffer l'eau contenue dans le dispositif à une température suffisante pour diminuer sa teneur en germes pathogènes.

Un autre objet de l'invention est un procédé de mise en route d'un dispositif selon l'invention dans lequel

(a) on fait enter du liquide dans le bac ;

(b) lorsque le niveau dudit liquide monte dans ledit bac jusqu'à un point préréglé qui est détecté par un détecteur de niveau de liquide dans le bac, on met en fonctionnement la pompe de circulation ;

(c) la pompe de circulation créé une pression de liquide suffisante pour que le liquide puisse envahir la buse, éventuellement après avoir envahi la chambre de mise en pression, et pour former un jet de liquide stable qui sort de l'orifice de sortie, sachant que pendant au moins une partie de ce temps, on fait entrer du liquide supplémentaire dans le bac ;

(d) lorsque le niveau dudit liquide dans ledit bac a atteint un point préréglé qui est détecté par un détecteur de niveau, on active l'alimentation électrique de l'élément piézo-électrique pour créer des gouttelettes de liquide.

Dans l'étape (d) ledit point préréglé et/ou ledit détecteur de niveau peu(ven)t être le(s) même(s) qu'à l'étape (b).

# EP 3 182 862 B1

**Figures**

Le dispositif selon l'invention est illustré de manière schématique par les figures 1 à 10 qui en montrent différentes vue et/ou différents modes de réalisation.

La figure 1 montre une vue éclatée du dispositif faisant apparaître sa partie supérieure, son bâti inférieur et son boitier électronique fermé par un capot.

La figure 2a montre une vue latérale, la figure 2b une vue frontale du même dispositif.

La figure 3 montre une vue éclatée du boitier électronique avec son capot qui protège la carte électronique.

La figure 4a montre la vue latérale d'une coupe longitudinale verticale du dispositif, la figure 4b montre la même coupe du même dispositif avec les niveaux de liquide en fonctionnement normal.

La figure 5 illustre l'implantation du dispositif sous une table ou sous un étal.

La figure 6 illustre le positionnement (figures 6d et e) et l'enlèvement (figures 6a, b et c) du dispositif sous un étal ; la figure 6d représente la vue latérale en perspective d'un coupe longitudinale verticale du dispositif, la figure 6e sa vue latérale en perspective.

La figure 7 montre la vue latérale d'une coupe longitudinale du dispositif selon un autre mode de réalisation de l'invention.

La figure 8 montre une vue éclatée et en perspective de la partie supérieure du dispositif selon un mode de réalisation particulier.

Les figures 9a et 9b montrent une vue en perspective d'un mode de réalisation particulier de la fixation de l'élément piézoélectrique.

La figure 10 montre une vue en perspective d'un mode de réalisation particulier du dispositif selon l'invention dans lequel le couvercle (figure 10a : fermé, figure 10b : ouvert) est fixé par des charnières latérales.

La figure 11 montre l'extrait de la vue latérale d'une coupe longitudinale d'un autre mode de réalisation de la partie supérieure d'un dispositif selon l'invention.

Liste des repères utilisés sur les figures :

| | | | |
|---|---|---|---|
| 1 | Système | 35 | Elément de fixation |
| 2 | Partie supérieure | 36 | Joint |
| 3 | Capot | 37 | Orifice |
| 4 | Bâti inférieur | 38 | Paroi arrière de la chambre 52 |
| 5 | Module de bac | 39 | Détecteur de niveau de liquide |
| 6 | Radiateur | 41 | Electrovanne |
| 7 | Bac | 42 | Pompe de circulation |
| 8 | Boitier électronique | 43 | Capteur de niveau |
| 9 | Module de buse | 44 | Arrivée d'eau |
| 10 | Nébuliseur (diffuseur) | 45 | Résistance chauffante |
| 11 | Glissière | 46 | Elément piézoélectrique |
| 12 | Connexion rapide de l'embout 22 | 47 | Vidange |

(suite)

| 13 | Compartiment d'accueil | 48 | Plaque de stabilisation |
|---|---|---|---|
| 14 | Conduit pour brouillard | 49 | Concentrateur acoustique (buse) |
| 15 | Mât diffuseur | 50 | Sortie de buse |
| 16 | Orifice du nébuliseur 10 (diffuseur) | 51 | Orifice d'admission dans la buse |
| 21 | Entrée d'air | 52 | Chambre de mise sous pression |
| 22 | Embout de sortie du brouillard | 53 | Jet de liquide |
| 23 | Tube de sortie du brouillard | 54 | Corps de la partie supérieure 2 |
| 24 | Ventilateur | 55 | Anneau joint d'étanchéité |
| 30 | Carte électronique | 56 | Gorge |
| 31 | Composants électroniques | 57 | Rebord |
| 32 | Connecteur ou câble électrique | 58 | Charnière |
| 33 | Support de l'élément piézoélectrique | 60 | Table (étal) |
| 34 | Orifice dans le support 33 | | |

**Description détaillée**

Le brouillard diffusé par le système (dispositif) **1** selon l'invention est généré par le module de buse **9** qui comprend un élément piézo-électrique **46** stimulant la formation de brouillard à partir d'un liquide qui circule dans le système et plus précisément dans le son bâti inférieur **4**. Ledit module de buse **9** comprend un concentrateur acoustique (buse) **49** ouvert en direction du tube de sortie du brouillard **23** de la partie supérieur du système **1**.

Le module de buse **9** comprend une buse de concentration **49** (appelé aussi concentrateur acoustique), de type connu, apte à contenir un liquide à pulvériser (typiquement de l'eau) et présentant un orifice de sortie **50,** la section transversale de l'intérieur de ladite buse de concentration **49** présentant un rétrécissement progressif en direction dudit orifice de sortie **50**. Ladite buse **49** présente en outre, sur le côté opposé à son orifice de sortie **50,** un élément (céramique) piézo-électrique **46** apte à émettre des ondes acoustiques dans le liquide. La paroi interne de ladite buse **49** est en un matériau dur apte à réfléchir les ondes acoustiques générées par ledit élément piézo-électrique **46**. Avantageusement la forme convergente des parois internes de la buse **49** est déterminée de manière à faire focaliser les ondes acoustiques ultra-soniques à un endroit proche de la partie centrale de l'orifice de sortie **50 ;** ainsi est généré un brouillard de micro-gouttelettes du liquide à pulvériser lorsque la buse **49** est remplie de liquide et la céramique piézo-électrique **46** émet des ondes acoustiques de fréquence et intensité appropriées. Ladite forme convergente des parois internes de la buse **49** présente avantageusement une symétrie radiale. Cette forme convergente est de préférence parabolique, ce qui améliore le rendement de la buse de concentration **49**.

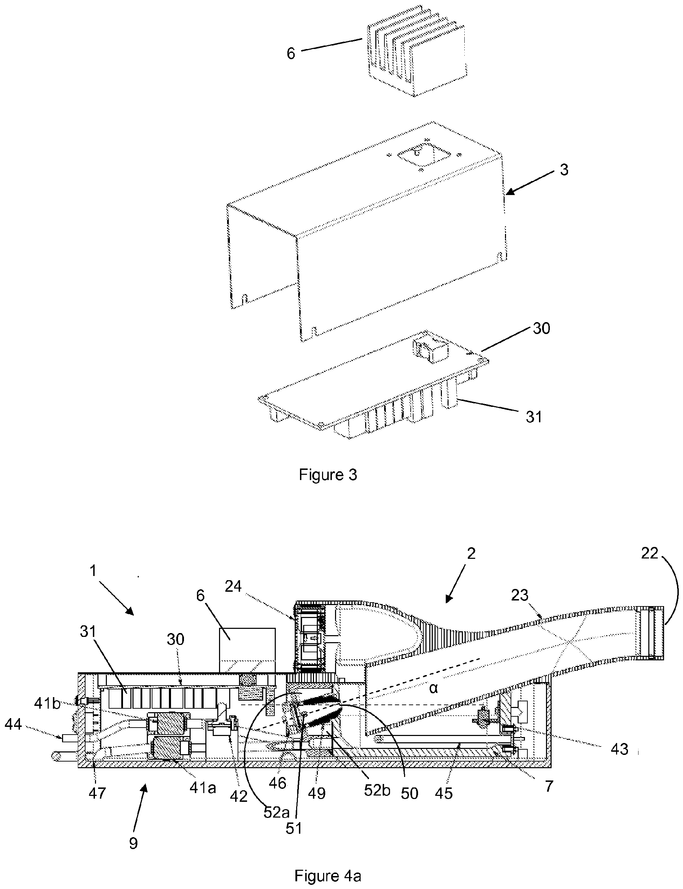

Selon l'invention, et comme illustré sur la figure 4a, l'axe longitudinal de la buse **49** est incliné par rapport à la verticale. Cette inclinaison, exprimée par l'angle $\alpha$ par rapport à l'horizontale, vise à diminuer la hauteur totale du système **1** et en particulier de sa partie supérieure **2**. L'angle $\alpha$ peut être inférieur à 45°, de préférence inférieur à 30° et encore plus préférentiellement inférieur à 20°. Dans le cadre de la présente invention on préfère un angle $\alpha$ compris entre 0 et 30°, et de préférence entre 5 et 20°.

De plus un fonctionnement quasi horizontal de la buse **49** (angle 15° par exemple) favorise une augmentation du débit. Dans ce cas, la pression hydraulique sur la surface de l'élément piézoélectrique **46** est moins importante et les ondes acoustiques peuvent donc se propager plus facilement en comparaison à un fonctionnement vertical de la buse. Le fonctionnement quasi horizontal de la buse nécessite la présence d'une pompe de circulation **42**. Cette pompe **42** est optionnelle pour un fonctionnement vertical ou même incliné (par exemple à 45°), à condition cependant que la totalité de la surface de l'élément piézoélectrique **46** soit recouvert de liquide, mais la présence de la pompe **42** est préférée car elle rend le système moins sensible contre l'effet de variations de débit. Par ailleurs, elle permet l'utilisation d'une chambre de mise en pression **52** comme expliqué ci-dessous.

L'orifice de sortie **50** de la buse **49** présente de préférence une forme circulaire. Dans une mode de réalisation, son diamètre est compris entre 3 et 8 mm, et avantageusement entre 4 et 6 mm ; la longueur intérieure de la buse est avantageusement comprise entre 25 mm et 42 mm, sachant que cette distance correspond au champ proche des ultrasons générés par la céramique piézo-électrique **46**. A titre d'exemple, on peut utiliser une buse **49** de hauteur 38 mm, avec un orifice de sortie d'un diamètre de 6 mm. La section d'admission de la buse **49** (i.e. la somme des surfaces des orifices d'admission **51**) doit être supérieure à la section de l'orifice de sortie **50** (de préférence au moins trois fois supérieure) afin d'éviter le phénomène de cavitation dans la buse **49** (ainsi qu'un manque d'eau). Cette condition est remplie par exemple avec quatre orifices d'admission **51** d'un diamètre de 5 mm pour un orifice de sortie **50** d'un diamètre de 6 mm. Ces orifices d'admission **51** permettent d'assurer le bon remplissage de la buse **49,** diminuent les pertes de charge du système et diminuent la pression sur l'élément piézo-électrique **46.** On constate par ailleurs que la présence de plusieurs orifices d'admission **51** repartis dans la partie basse de la buse diminue le risque de formation de bulles par cavitation lors du fonctionnement de la céramique piézo-électrique **46.**

L'admission du liquide en provenance du bac **7** dans la buse **49** se fait à travers au moins un orifice d'admission **51.** De manière préférée, une pluralité d'orifices d'admission **51** sont aménagés autour de l'axe longitudinal de la buse **49** dans une zone proche de l'élément céramique piézo-électrique **46.** Ce remplissage de la buse **49** en liquide a deux fonctions. D'une part, sachant qu'en fonctionnement, une partie du liquide contenu dans la buse **49** part sous la forme de brouillard, il est nécessaire de réapprovisionner la buse **49** en liquide. D'autre part, un remplissage continu de la buse **49** associé à la recirculation du liquide permet de stabiliser les conditions de fonctionnement du système **1** même en présence de perturbation mécaniques du système **1,** par exemple lors d'un choc mécanique contre l'étal sur lequel est monté ledit système **1.**

Sur la face arrière dudit concentrateur acoustique **49** se trouve ledit élément piézo-électrique **46.** Ce dernier présente une surface active dirigée vers la sortie **50** de la buse **49 ;** cette surface active peut en particulier être plane ou concave. Pendant le fonctionnement (excitation électrique) de l'élément piézo-électrique **46** cette surface active est immergée dans ledit liquide pour lui transmettre les ondes acoustiques qu'il génère. Ledit élément piézo-électrique **46** est de préférence de forme cylindrique, typiquement une plaquette de forme circulaire. A titre d'exemple, ledit élément piézo-électrique **46** peut avoir un diamètre de 10 mm ou de 405 mm, ou tout diamètre compris en ces deux valeurs. La fréquence d'ultrasons est avantageusement comprise entre 0,3 MHz et 3 MHz, de préférence entre 1,3 MHz et 2,3 MHz. Elle peut être par exemple de 1,68 MHz.

Le module de buse **9** est traversé par un flux du liquide à nébuliser ; ce flux est généré par une pompe de circulation **42** qui se trouve avantageusement dans le boitier électronique **8.** Le liquide à nébuliser est le plus souvent de l'eau. Le liquide quitte ladite pompe **42** et envahit la partie inférieure de la chambre de mise sous pression **52b** du module de buse **9,** puis la buse **49** elle-même à travers le au moins un orifice d'admission dans la buse **51.** Le liquide sortant par l'orifice de sortie **50** de la buse **49,** de préférence sous la forme d'un petit jet, se projette dans le tube de collecte qui se vide dans le bac **7** ; la pompe de circulation **42** puise le liquide dans le bac **7** et le fait entrer dans le module de buse **9.**

Lors du remplissage du bac **7,** le liquide envahit d'abord la partie inférieure **52b** de la chambre de mise en pression, puis il envahit (à travers les orifices d'admission dans la buse **51**) la buse **49** (et recouvre la face interne de l'élément piézoélectrique **46**) dès que le niveau de liquide dans le module de buse **9** est suffisant, le liquide envahit également la partie supérieure de la chambre de mise sous pression **52a** du module de buse **9.** Un petit jet de liquide sort de l'orifice de sortie **50** de la buse **49,** et lorsque le niveau de liquide monte encore il envahit également la partie supérieure **52a** de la chambre de mise en pression. La pompe de circulation **42** maintient le liquide en circulation, de préférence à un niveau juste suffisant pour assurer le parfait remplissage de la cuve de la buse. Lorsque l'élément piézoélectrique **46** est mis en fonction le jet de liquide **53** s'allonge (effet de pompe acoustique, c'est pour favoriser ce phénomène que la pompe doit être de préférence centrifuge pour ne pas brider la pompe acoustique) et la buse **49** produit un brouillard de fines gouttelettes

Le jet de liquide **53** généré à la sortie **50** de la buse **49** sous l'effet de l'excitation par l'élément piézo-électrique **46** se vide dans un tube de collecte **23** dont l'axe longitudinal est de préférence incliné par rapport à la verticale. De préférence l'axe du tube de collecte **23** est parallèle à l'axe du concentrateur acoustique **49,** et encore plus préférentiellement ces deux axes coïncident.

Le tube de collecte **23** peut être traversé par un flux d'air généré par un moyen de ventilation **24,** qui est de préférence réglable en débit et qui est situé en amont, en aval ou à l'intérieur du tube de collecte **23.** Ledit flux d'air entre dans le système de nébulisation 1 par une entrée d'air **21** et emporte (par poussée ou par aspiration) les micro-gouttelettes de liquide générées par la buse **49** autour du jet de liquide **53.** Ainsi se forme un brouillard de micro-gouttelettes qui quitte le tube de collecte **23** par sa sortie **22** et entre dans son environnement de destination, par exemple l'habitacle d'un véhicule ou l'espace d'air au-dessus d'un étal **8,** en étant possiblement conduit à travers un nébuliseur **10** présentant au moins un orifice **16** aménagé avantageusement de manière à conférer au brouillard une direction et/ou une hauteur et/ou une largeur de diffusion voulue.

Le jet de liquide **53** se projette contre la paroi interne du tube de collecte **23,** et le liquide ainsi recueilli se jette dans le bac **7.** Ainsi le tube de collecte **23** sert également comme tube de guidage de la diffusion du brouillard.

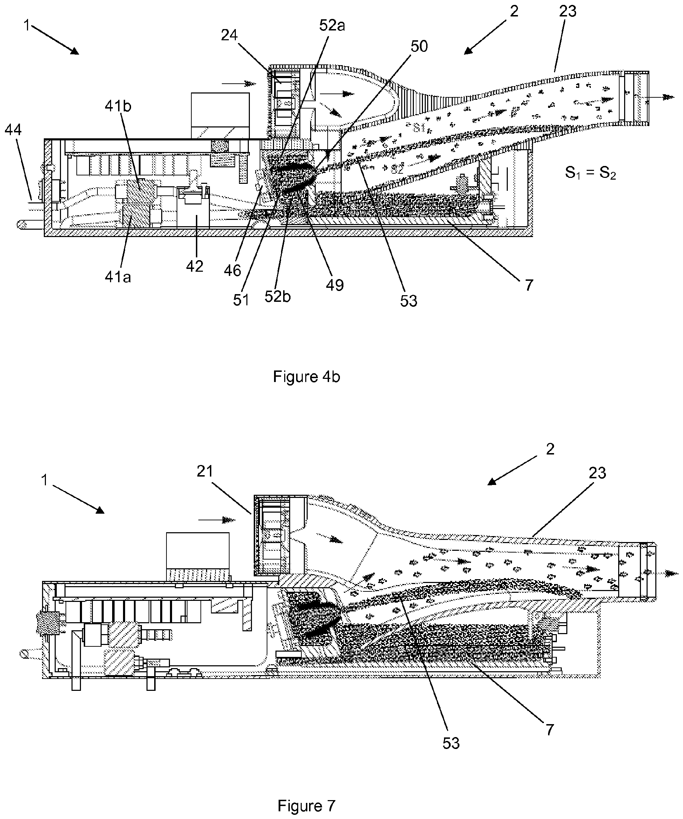

Avantageusement le tube de guidage **23** présente des caractéristiques aérauliques optimisées afin d'augmenter le débit des gouttelettes. En particulier, la surface autour du jet est homogène et lisse afin de collecter le maximum de gouttelettes ; la trajectoire du conduit épouse la forme du jet afin de ne pas perturber l'hydraulique. Cela est illustré sur la figure 4b. Cette forme favorise l'écoulement du liquide, évite toute rétention d'eau et tout vortex pouvant perturber l'écoulement du liquide, afin de ne pas avoir des zones de stagnation qui présenteraient un risque pour l'hygiène du dispositif. Cette forme diminue également le bruit lié à l'écoulement du liquide et à l'écoulement de l'air : le dispositif selon l'invention est particulièrement silencieux.

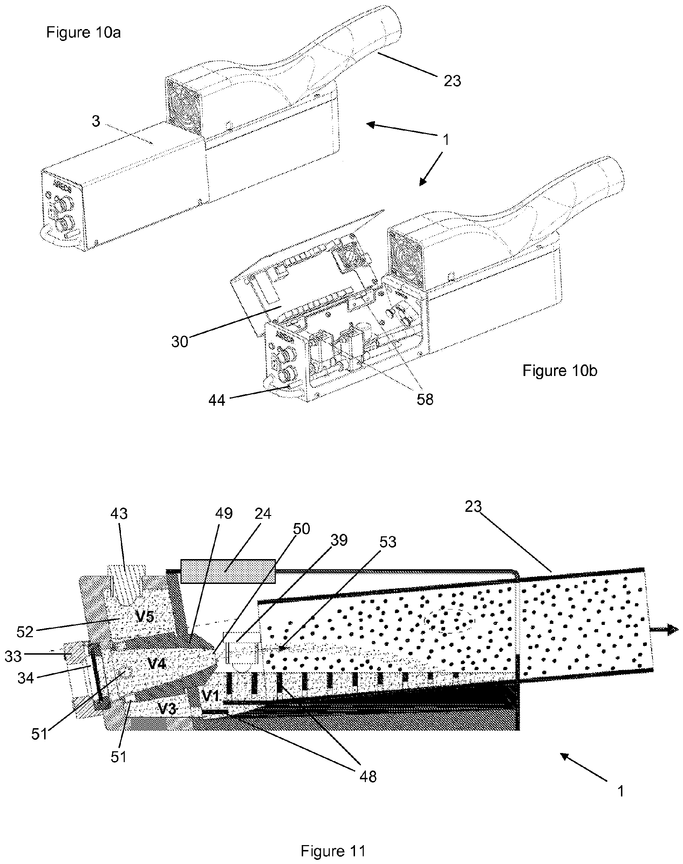

Plusieurs autres modes de réalisation peuvent être adoptés afin d'améliorer les caractéristiques aérauliques du système. On peut réaliser le tube de guidage de manière à provoquer un effet venturi, comme illustré sur la figure 7. On peut prévoir que la mise en pression d'air se fait par le haut du bac, en particulier en positionnant le ventilateur de manière à ce que ses pales tournent autour d'un axe sensiblement vertical (figure 11). D'une manière générale on peut utiliser un ventilateur axial ou centrifuge.

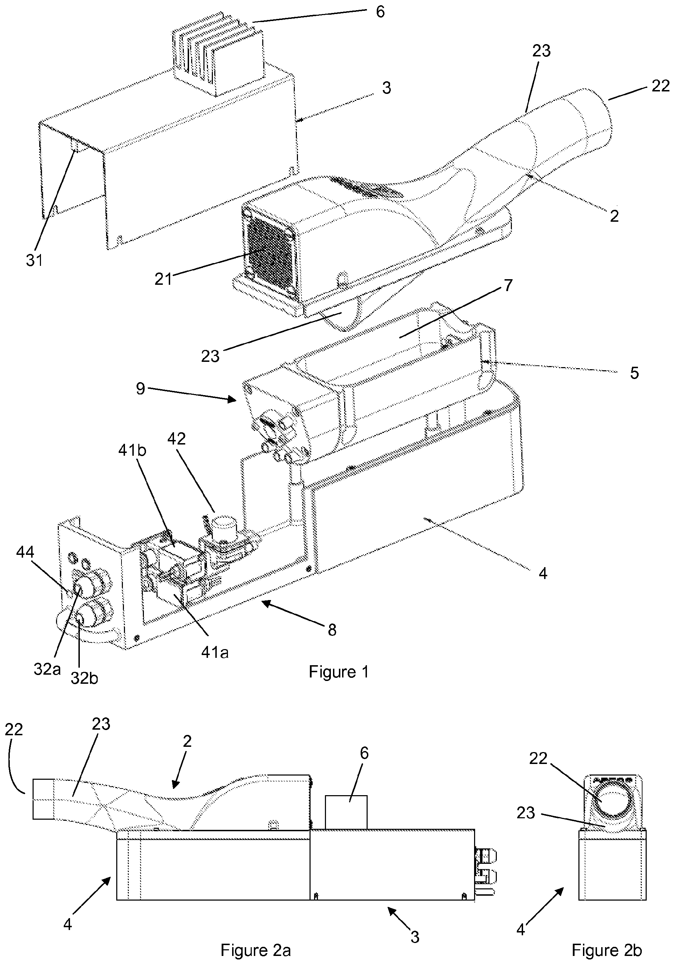

Dans le mode de réalisation de l'invention illustré sur la figure 1, le réservoir de collecte est représenté par le tube de sortie du brouillard **23** et forme un élément monobloc avec la buse **49.** Cela permet de simplifier sa construction ; par ailleurs un tel élément monobloc est plus robuste.

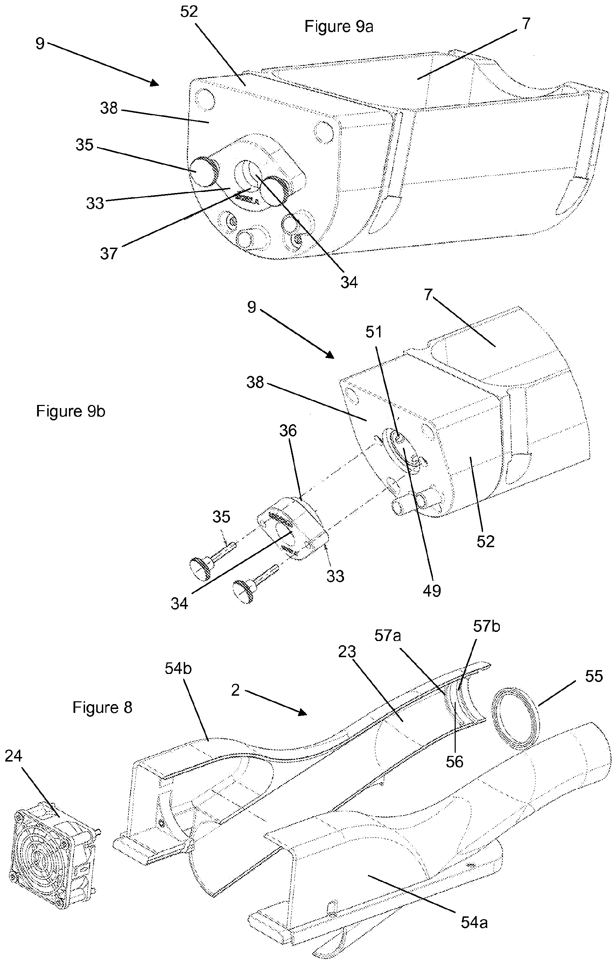

Alternativement on peut réaliser le corps de la partie supérieure **2** du dispositif **1** en deux parties **54a, 54b,** de préférence symétriques, générées par une coupe longitudinale, comme cela est illustré sur la figure 8. Les deux parties **54a, 54b** peuvent être assemblées par toute technique approprié, telle que le vissage, le collage, le clipsage. Il est avantageux d'insérer au moins un anneau **55** (tenu de préférence dans une gorge **56** et/ou entre deux rebords **57a, 57b**) dans le sens perpendiculaire à l'axe pour consolider le corps **54** et assurer l'étanchéité et la connexion vers le compartiment d'accueil **13.**

Ledit élément piézo-électrique **46** peut absorber une puissance électrique importante, par exemple 30 à 60 W pour un diamètre de 20 mm. Environ 40% de cette puissance est rendue sous forme d'énergie acoustique transmise au liquide, le reste est dissipé sous forme thermique. Selon un mode de réalisation de l'invention l'élément piézo-électrique **46** est monté sur un support **33** qui présente dans sa partie arrière un orifice **34** qui débouche sur la partie arrière de l'élément piézo-électrique **46** ; cet orifice **34** contribue au refroidissement naturel de l'élément piézoélectrique **46.** Ce support **33** peut être monté directement sur la partie arrière **38** de la chambre de mise en pression **52** dans laquelle est insérée la buse **49.** Il est avantageux d'utiliser un joint **36** pour assurer l'étanchéité entre le support **33** et la partie arrière **38** de la chambre de mise en pression **52.** Le support peut être fixé à l'aide de moyens de fixation **35** de préférence réversibles, afin de faciliter la maintenance, tel qu'une vis de serrage. Le support **33** peut être réalisé en métal ou en plastique (par exemple en polyamide, tel que PA66, avantageusement chargé de fibres de verre) ; il doit pouvoir s'accommoder aux contraintes thermiques entre l'intérieur (contact avec l'élément piézoélectrique **46**) et l'extérieur (air).

Pour éviter l'endommagement de l'élément piézo-électrique **46** pendant son fonctionnement, il doit être constamment refroidi par le liquide afin d'éviter sa détérioration par surchauffe. Les inventeurs se sont rendu compte que lorsque l'élément piézo-électrique **46** fonctionne à sec même pour une très courte durée, il risque d'être endommagé ou même être détruit.

Pour éviter cela, les inventeurs ont prévu que le système de nébulisation **1** puisse comporter des moyens appropriés permettant d'empêcher que ledit élément piézoélectrique **46** ne fonctionne (i.e. n'émette pas d'ondes acoustiques ou seulement des ondes acoustiques de très faible puissance) lorsque l'élément piézo-électrique **46** n'est pas immergé dans le liquide à pulvériser. Ces moyens peuvent prendre différentes formes, et comprennent en général au moins un moyen de détection du manque de liquide et/ou un moyen de détection de l'échauffement de l'élément piézo-électrique **46,** et un moyen de rétroaction sur l'alimentation électrique dudit élément piézo-électrique **46.**

Ledit moyen de détection du manque de liquide peut être un capteur de niveau ou un capteur de présence qui coupe ou régule le fonctionnement de l'élément piézo-électrique **46.** Ce capteur peut être un capteur optique ou un capteur capacitif ou encore un capteur inductif, mais parmi ces trois, on préfère un capteur optique qui présente une meilleure fiabilité et notamment une très faible hystérésis ($\pm$1 mm). Ce capteur peut se situer à différents endroits, notamment dans le récipient de collecte, ou à l'intérieur de la buse **49,** ou encore dans la chambre de mise en pression **52** de la buse **49.** Dans un mode de réalisation on utilise un capteur situé dans le bac **7.**

Différents types de pompes peuvent être utilisés pour la pompe de circulation **42.** La pompe est avantageusement à débit réglable ; une pompe réglable entre 0,1 et 2,8 litres/min convient pour une buse **49** qui présente les dimensions indiquées ci-dessus. Dans un mode de réalisation la pompe de circulation **42** est une pompe hélice. Avantageusement, cette pompe absorbe un courant continu et on règle la tension pour faire varier la vitesse de rotation et donc le débit de refoulement en sortie de la buse **49,** ce qui permet de modifier la longueur du jet.

Le dispositif **1** selon l'invention, grâce à sa buse **49** à focalisation d'ondes acoustiques générées par un élément piézo-électrique **46,** est apte à créer et répandre un brouillard formé de gouttelettes d'un diamètre moyen typique compris entre 0,5 $\mu$m et 30 $\mu$m, et plus particulièrement entre 0,5 $\mu$m et 10 $\mu$m, de préférence entre 1 $\mu$m et 5 $\mu$m. Cette taille de particules dépend notamment de la fréquence des ondes acoustiques produites par ledit élément piézo-électrique **46.**

La figure 1 montre les trois parties du dispositif **1** selon l'invention, à savoir sa partie supérieure **2,** son bâti inférieur **4** et son boitier électronique **8** fermé par un capot **3.** Ledit boitier électronique **8** est avantageusement disposé derrière le bâti inférieur **4.** Ces trois parties sont de forme sensiblement allongée. La partie supérieure **2** comprend le tube **23** de sortie du brouillard qui se projette en avant. Le bâti inférieur **4** comprend un module de bac **5** comprenant le bac **7** et le module de buse **9.** Le bac **7** peut être séparé dudit module de bac **5** pour être remplacé en cas de besoin. Le tube **23** de sortie du brouillard peut être incurvé vers l'horizontale dans sa parte proche de sa sortie **22,** et l'axe de sa sortie est de préférence horizontal.

La figure 2a montre la forme généralement allongée du dispositif **1,** avec le tube **23** de sortie du brouillard qui se projette en avant.

La figure 2b montre que le dispositif **1** présente une faible largeur, qui favorise sa manipulation pour des opérations d'installation, de désinstallation et de maintenance.

Comme montré sur la figure 3, le boitier électronique **8** est recouvert d'un capot **3.** Le boitier électronique **8** comprend également au moins une carte électronique **30** garnie de composants électroniques **31;** elle peut être fixée sous le capot **3.** Le boitier électronique **8** comprend avantageusement un radiateur **6,** qui est avantageusement en contact thermique avec la carte électronique **30** ; ledit radiateur peut être intégré dans le capot **3.**

On peut réaliser ledit capot **3** en métal, ce qui favorise la dissipation de chaleur ; dans certains cas cela peut rendre superflu la présence d'un radiateur.

Ledit capot **3** peut être relié audit boitier **8** par des charnières (voir la figure 10) ; cela facilite l'accès aux composants (pompe, électrovannes) lors des travaux de maintenance.

La figure 4a permet d'expliquer en plus grand détail le fonctionnement du dispositif selon l'invention. Le boitier électronique **8** comprend notamment une pompe de circulation **42** qui génère le jet de liquide **53** (eau) dans la buse **49,** comme décrit ci-dessus. Le système **1** peut être alimenté en eau par l'extérieur : l'eau entre par une arrivée d'eau **44** située sur l'arrière du boitier électronique, traverse une électrovanne **41** en position ouverte et entre dans le module de buse **9.** Pour couper l'eau l'électrovanne **41** peut être fermée ; cette opération peut être effectuée automatiquement par la carte électronique.

La figure 4b permet d'illustrer le fonctionnement du dispositif **1** selon l'invention : lors du remplissage du bac **7,** le liquide envahit d'abord la partie inférieure **52b** de la chambre de mise en pression, puis il envahit (à travers les orifices d'admission dans la buse **51**) la buse **49** (et recouvre la face interne de l'élément piézoélectrique **46**) et enfin la partie supérieure **52a** de la chambre de mise en pression ; un petit jet de liquide **53** sort de l'orifice de sortie **50** de la buse **49.** La pompe de circulation **42** maintient le liquide en circulation.

La figure 7 montre la vue latérale d'une coupe longitudinale du dispositif **1** selon un autre mode de réalisation de l'invention, dans lequel l'entrée de l'air se fait en parallèle au jet de liquide qui sort de la buse ; ainsi le brouillard généré par la buse est aspiré par le flux d'air (effet venturi).

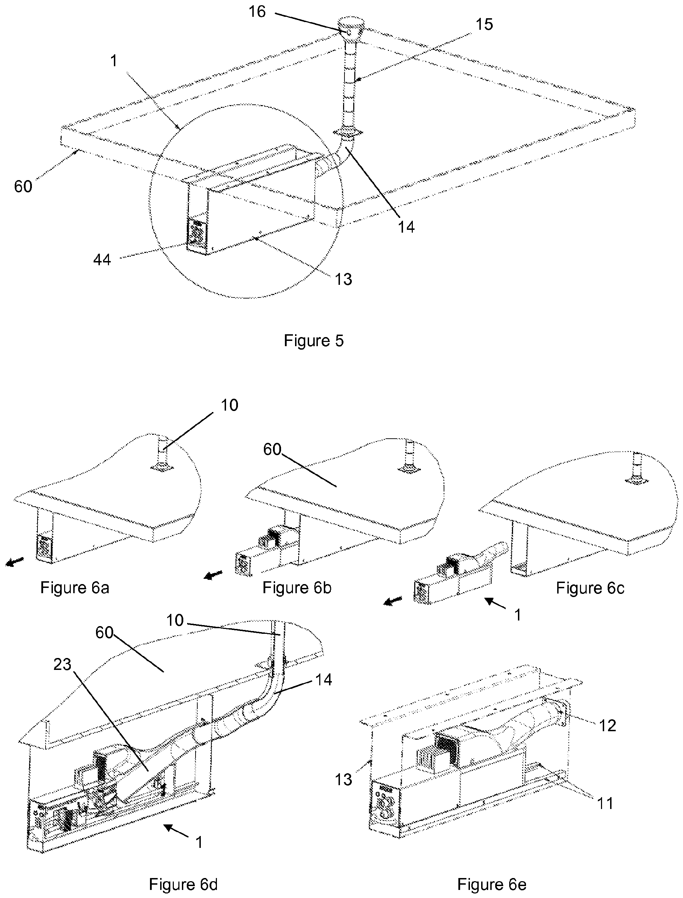

Comme montré sur la figure 5, le dispositif **1** selon l'invention est apte à être intégré dans une table (étal) **60,** c'est-à-dire une surface sur laquelle sont exposés des objets, notamment à la vente, et qu'il s'agit de soumettre à l'effet du brouillard de liquide généré par ledit dispositif **1.** Cet effet peut notamment être un effet humidifiant et/ou rafraîchissant. Lesdits objets peuvent être des produits alimentaires, notamment des produits végétaux frais (par exemple des fruits ou légumes), des produis de la mer (par exemple des poissons, crustacés ou moules), des fromages, des viandes, des produits à base de viande (par exemple charcuterie) ou encore des produits non alimentaires (par exemple des plantes en pot ou des fleurs coupées).

Il est également possible d'utiliser le dispositif **1** selon l'invention dans d'autres situations d'humidification et de rafraîchissement, par exemple dans des pièces d'habitation, dans des habitacles (véhicule par exemple).

Dans un mode de réalisation illustré sur les figures 5 et 6, le dispositif **1** est disposé sous ladite table **60,** dans un compartiment d'accueil **13** qui débouche sur une face de la table **60** ; ledit compartiment d'accueil **13** peut être fermé par un capot (non montré sur les figures). Si le dispositif est monté sous une table **60,** le tube de sortie du brouillard **23** se prolonge avantageusement par un conduit pour brouillard **14** ; avantageusement ledit tube de sortie du brouillard **23** peut être inséré dans ledit conduit pour brouillard **14.** A travers ledit conduit **14** le brouillard est acheminé (sous l'influence du courant d'air généré par le ventilateur **24** qui emporte ledit brouillard) vers au moins un orifice de diffusion. Ledit orifice de diffusion peut être monté directement sur la surface de table **60** ou à faible hauteur, ou peut être monté sur un mât diffuser **15** qui se projette au-dessus de la surface de la table **60,** comme montré sur la figure 5.

Dans un autre mode de réalisation ledit dispositif **1** est fixé sous la table **60** à l'aide de glissières **11** qui peuvent se trouver dans le compartiment d'accueil **13** (figure 6e), ou qui peuvent remplacer le compartiment d'accueil.

Selon un aspect particulièrement avantageux de l'invention, le système 1 selon l'invention peut être retiré facilement, par exemple il peut être retiré de son compartiment d'accueil **13** ou il peut être retiré à l'aide desdites glissières. Trois étapes de ce procédé de retrait sont illustrées sur les figures 6a, 6b et 6c (retrait en direction de la flèche). Le procédé de retrait est grandement facilité par le fait que le tube de sortie du brouillard **23** s'insère simplement dans ledit conduit pour brouillard **14** ; les figures 6d et 6e montrent deux variantes de ce mode de réalisation. Il n'est pas nécessaire que la liaison entre le tube de sortie de brouillard **23** et le conduit **14** soit fixe ; l'étanchéité est assuré par l'anneau **55** situé dans la gorge **56** du tube de sortie **23.** Le retrait peut s'opérer sans outil. Le dispositif **1,** éventuellement après avoir débranché son câble d'alimentation électrique et/ou son tuyau d'alimentation en liquide, peut ensuite être posé sur une table ou un établi à proximité, ou peut être emporté pour une opération de maintenance. Le dispositif selon l'invention, de par sa construction amélioré, qui est notamment modulaire, et qui facilite son accès et son démontage, peut être simplement échangé contre un autre dispositif **1** neuf ou en bon état de maintenance. Cette manière de procéder présente l'énorme avantage de n'interrompre le fonctionnement du système de nébulisation que pour une très brève durée (de l'ordre d'une minute ou de quelques minutes), et d'éviter d'effectuer la maintenance du dispositif sur son lieu d'utilisation, qui est en général un lieu accueillant le public.

Le système **1** selon l'invention peut être alimenté par un câble d'alimentation secteur. Etant conçu de manière à consommer très peu d'énergie électrique (et de fonctionner en très basse tension TBT), il peut également être alimenté par un câble d'alimentation qui conduit vers un transformateur à basse tension. Il peut également être alimenté par une batterie et un réservoir d'eau (solide ou souple).

Dans ce cas, l'ensemble batterie et réservoir est fixé sur la table ou sur un chariot mobile. L'utilisateur peut déplacer le chariot vers une zone de recharge, il connecte l'arrivée d'eau et l'arrivée électrique. Ce dispositif est optimisé en termes d'utilisation, le remplissage du réservoir et la charge de la batterie sont automatisés.

Le fait de pouvoir éviter une alimentation directe au secteur permet d'installer le dispositif selon l'invention dans des zones humides, où une parfaite isolation des individus proches du dispositif (clients, vendeurs du magasin, personnel de maintenance) ne peut être garantie en toutes circonstances (rayon des produits de la mer par exemple). Cela représente un autre avantage du système **1** selon l'invention.

La diminution de la consommation énergétique et surtout électrique est obtenue grâce à l'optimisation du débit de la pompe de circulation **42,** du diamètre de la sortie **50** de la buse **49,** de l'inclinaison de la buse **49,** de la forme et inclinaison du tube **23** de sortie du brouillard, de la géométrie des conduits de ventilation et de l'efficacité du refroidissement de l'élément piézoélectrique **46** grâce à son support **33** pourvu d'un orifice **34.**

Par exemple, pour un angle de de 15° par rapport à l'horizontal, un diamètre de buse de 6 mm, et un débit de la pompe de 1l/min, le débit de nébulisation est d'environ 1,9 litre par heure ce qui représente un rendement de 32 Watts heure par litre. Avec les systèmes classiques, le rendement est d'environ 75 Watts heure par litre. Avec le système selon l'invention, le gain est d'environ 58% d'énergie électrique pour le même débit de nébulisation.

Selon un autre aspect de l'invention, un certain nombre des éléments de structure et des éléments fonctionnels du dispositif peuvent être réalisés en matière plastique (notamment en polyamide, tel que le PA 66), avantageusement renforcé par des fibres de verre ou autres fibres. Cela permet d'alléger le dispositif, afin de faciliter sa manipulation, et cela peut aussi faciliter la production en série desdits éléments par des procédés de plasturgie. Peuvent être réalisés en matières plastiques appropriées notamment : le bâti inférieur **4,** le module de bac **5,** la partie supérieure **2** avec le tube de sortie du brouillard **23** (à l'exception de certains composants du moteur du ventilateur **24**). Le capot **3** du boitier électronique peut également être réalisé en matière plastique, mais pour des raisons de blindage électromagnétique et de dissipation de la chaleur, l'utilisation d'une tôle métallique peut présenter des avantages.

Selon un autre aspect de l'invention, le bâti inférieur **4** peut comprendre une ou plusieurs plaques de stabilisation **48,** visibles sur la figure 11, qui évitent en cas de perturbation mécanique du système **1** une trop grande fluctuation du niveau de liquide dans le bac **7** et dans la buse **49,** ladite fluctuation de niveau pouvant nuire au recouvrement permanent de la surface émettrice de l'élément piézo-électrique **46** par du liquide. Lesdites plaques de stabilisation **48** peuvent être disposées horizontalement et/ou verticalement. Elles peuvent comporter des orifices. Elles peuvent être disposées en biais.

La figure 11 illustre un autre mode de réalisation de l'invention qui est lié aux relations entre différents volumes. On désigne par V1 le volume de liquide dans le bac **7,** par V2 le volume de liquide dans la pompe de circulation et les conduites la reliant au bac **7** (non montrée sur la figure), par V3 le volume de liquide dans la chambre de mise en pression **52** en partie inférieure de la buse **49** (i.e. inférieur à la hauteur qui définit le plan inférieur du volume V5, voir ci-dessous) et par V4 le volume de liquide dans la buse **49.** Le volume V3 peut être très faible voire nul. On désigne par V5 le volume de liquide dans la partie supérieure de la chambre de mise en pression **52** se situant à un niveau de liquide supérieur au plus haut des trois points suivants : l'orifice **51** d'admission d'eau de la buse situé le plus haut, ou le bord supérieur de l'orifice **50** de sortie de la buse **49,** le point le plus haut de la céramique **46** piézo-électrique. Ainsi quelle que soit l'inclinaison $\alpha$ de la buse **49,** tout point de la céramique piézo-électrique **1** se trouve à un niveau inférieur au volume V5.

En fonctionnement normal du système **1,** les volumes V1, V2, V3, V4 et V5 sont remplis de liquide, la pompe de circulation **42** et l'élément piézo-électrique **46** fonctionnent et génèrent un jet d'eau **53** de longueur approximativement constante, ce qui illustre l'état stationnaire du système.

Selon l'invention, on dimensionne la chambre de mise en pression **52** de manière à ce qu'elle présente un volume tampon (volume de sécurité) V5 suffisant par rapport au volume V4 de la buse **49,** de manière à ce que dans le cas où la pompe de circulation **42** ne pompe plus de liquide (par exemple lorsque le niveau de liquide dans le bac **7** est insuffisant, ou lorsque la pompe de circulation **42** est désamorcée), le volume V5 assure durant un certain laps de temps $t_s$ l'alimentation en eau du volume V4 de la buse **49,** de manière à ce que l'élément piézo-électrique **46** soit encore noyé pendant ce laps de temps $t_s$. Ce laps de temps $t_s$ peut être, tout ou en partie, mis à profit pour couper l'alimentation de l'élément piézo-électrique **46,** et/ou pour attendre si le niveau de liquide se rétablit tout seul (notamment en cas de perturbation mécanique ou lorsque la pompe de circulation **42** a simplement avalé une bulle d'air). Le temps $t_s$ doit être suffisamment long pour permettre la coupure totale de l'alimentation de l'élément piézo-électrique **46** et l'arrêt de son fonctionnement ; la demanderesse a en effet observé que l'arrêt du fonctionnement de l'élément piézo-électrique **46** n'est pas instantané lorsque l'on coupe son alimentation électrique : l'élément piézo-électrique **46** continue à vibrer pendant que les circuits de son alimentation électrique se vident.

D'une manière générale, on préfère dans le cadre de la présente invention que le rapport des volumes V5/V4 soit d'au moins 2 et de préférence d'au moins 6, et encore plus préférentiellement d'au moins 12.

D'une manière plus précise, on prend en considération le temps de réaction souhaitable du système pour couper l'alimentation électrique de l'élément piézo-électrique **46** en cas de manque d'eau. Il n'est pas forcément souhaitable de couper l'alimentation à la moindre baisse de niveau dans la chambre de mise en pression **52,** ce qui risque de conduire à une génération de brouillard trop intermittente. Mais il faut être sûr que lorsque cette baisse se prolonge ou s'aggrave au-delà d'une certaine durée, l'alimentation électrique de l'élément piézo-électrique **46** soit coupée ou au moins fortement réduite. Ainsi, les inventeurs considèrent que dans un environnement mécaniquement instable (véhicule, étal entouré par une foule de personnes) le système de nébulisation 1 selon l'invention doit permettre un fonctionnement de l'élément piézo-électrique **46** pendant une durée $t_s$ comprise entre 1 et 10 secondes sans alimentation en liquide par la pompe de circulation **42,** et de préférence entre 2 et 5 secondes.

Dans ce contexte, un paramètre important est le débit de liquide généré par l'élément piézo-électrique **46** à la sortie de l'orifice **50** de la buse **49** en l'absence de pompage par la pompe de circulation **42** ; ce débit (qui se manifeste souvent par la présence d'un petit jet d'eau appelé « fontaine acoustique ») dépend (pour un angle $\alpha$ de positionnement de la buse **49** et un liquide donnés) essentiellement de la puissance de l'élément piézoélectrique **46.**

De manière encore plus précise, le débit de la fontaine acoustique peut être exprimé par

$$Q_{piezo} = K \times P_{max}$$

où $P_{max}$ est la puissance électrique maximale consommée par l'élément piézoélectrique et $Q_{piezo}$ est le débit de la fontaine acoustique à cette puissance $Q_{piezo}$, et K est un facteur de proportionnalité. On souhaite une durée de fonctionnement de sécurité de $t_s$ secondes, c'est-à-dire que lorsque la pompe de circulation **10** cesse de fonctionner (notamment par désamorçage), le système dispose d'un délai d'environ $t_s$ secondes pour couper l'alimentation de l'élément piézoélectrique **46.** Avantageusement, le délai $t_s$ est compris entre 1 et 10 secondes, et on préfère une valeur entre 2 et 5 secondes. Selon l'invention, cet objectif peut être atteint en prévoyant un volume tampon de sécurité V5 suffisant, qui correspond au volume de la chambre de mise en pression **52** se situant à un niveau de liquide supérieur au bord supérieur de l'orifice **50** de sortie de la buse **49.** Ce volume doit être supérieur au volume V4 de la buse **49.**

On souhaite donc que $\qquad V5 \geq V4 + Q_{piezo} \times t_s.$

Cette relation peut être exprimée par $\qquad V5 \geq V4 + K \times P_{max} \times t_s$

Dans un exemple typique on utilise une buse **49** avec un volume V4 de 0,0054 litres, et $Q_{piezo}$ est 50 W pour une tension d'alimentation de 22 V avec un rendement acoustique d'environ 40% ; l'angle est $\alpha$ compris entre 0 et 30°. Dans ces conditions $P_{max}$ est d'environ 1,5 litres/min, et par conséquent K = 0,0005 l/W.s. Si l'on vise une valeur $t_s$ = 5 secondes, V5 doit être au moins égal à 0,13 litres. Le rapport V5/V4 est donc de 24. Comme indiqué ci-dessus, la valeur $t_s$ peut être inférieure à 5 secondes, ce qui tend à diminuer le rapport V5/V4.

**Revendications**

**1.** Dispositif de nébulisation (40) de forme globale allongée, de type à concentrateur acoustique d'ondes ultrasons, capable de générer un brouillard de gouttelettes d'un liquide à partir d'un liquide, comportant

- un bâti inférieur (4) de forme allongée, comportant un module de bac (5) et un module de buse (9),
- un boitier électronique (8) de forme allongée, situé dans la projection (et de préférence dans l'axe) dudit bâti inférieur (4) et pouvant faire corps avec ce dernier ou être détachable de ce dernier, ledit boitier électronique (8) comportant un capot (3),
- une partie supérieure (2) comportant un tube (23) de sortie du brouillard et un moyen de ventilation (24) apte à générer un flux d'air à travers ledit tube (23) de sortie du brouillard ;
- optionnellement des moyens de ventilation pour créer un flux d'air qui emporte ledit brouillard de gouttelettes à travers ledit tube (23) de sortie de brouillard vers l'extérieur dudit dispositif;

dans lequel dispositif :

- ledit module de buse comprend une buse (49) à concentrateur acoustique d'ultrasons pourvue d'au moins un orifice (51) d'admission de liquide et d'au moins un orifice de sortie de liquide (50), et au côté opposé dudit orifice de sortie (50) un élément piézo-électrique (46) apte à émettre des ondes acoustiques dans ledit liquide, et la section transversale de ladite buse (49) présentant un rétrécissement progressif en direction dudit premier orifice de sortie (50), de manière à ce que dans ladite buse (49) les ondes acoustiques soient focalisées pour créer un brouillard de gouttelettes dudit liquide ;

- une pompe (42) dite « pompe de circulation » est reliée d'une part au bac (7) et d'autre part à ladite buse (49) par le au moins un orifice (51) d'admission aménagé dans ladite buse (49), ladite pompe de circulation (42) étant apte à générer dans ladite buse (49) une pression de liquide suffisante pour maintenir un jet de liquide (53) sortant par ledit orifice de sortie (50) de la buse (49) ;

- la partie supérieure est disposée au-dessus du bâti inférieur (4), de manière à ce que la partie arrière dudit tube (23) de sortie du brouillard se trouve au moins partiellement à l'intérieur du module de bac, et le tube (23) de sortie de brouillard se projette vers l'avant du dispositif.

2. Dispositif selon la revendication 1, **caractérisé en ce que** ledit boitier électronique (8) se situe derrière ledit bâti inférieur (4), sachant que le sens « derrière » étant l'opposé du sens « devant » qui, lui, est défini par rapport à la direction de sortie (22) du tube (23) de sortie de brouillard.

3. Dispositif selon la revendication 1 ou 2, **caractérisé en ce qu'**il comprend en plus une chambre de mise en pression (52) qui est traversée par le liquide sortant de la pompe de circulation (42) avant son entrée dans ladite buse (49), le volume (V5) de la partie supérieure de la chambre de mise en pression (52) se situant à un niveau de liquide supérieur au plus haut des trois points suivants : l'orifice (51) d'admission d'eau de la buse situé le plus haut, le bord supérieur de l'orifice (50) de sortie de la buse (49), le point le plus haut de la surface émettrice de l'élément piézo-électrique (46), est au moins deux fois (de préférence au moins six fois et encore plus préférentiellement au moins douze fois) plus grand que le volume (V4) de la buse (49).

4. Dispositif (1) selon l'une quelconque des revendications 1 à 3, **caractérisé en ce que** ladite pompe de circulation est disposée dans ledit boitier électronique (8).

5. Dispositif (1) selon l'une quelconque des revendications 1 à 4, **caractérisé en ce que** l'axe longitudinal de ladite buse (49) est sensiblement parallèle à l'axe dudit tube (23) de sortie du brouillard.

6. Dispositif selon l'une quelconque des revendications précédentes, **caractérisé en ce que** la somme des surfaces des orifices d'admission (51) est supérieure, et de préférence au moins trois fois supérieure, à la section de l'orifice de sortie (50).

7. Dispositif selon l'une quelconque des revendications précédentes, **caractérisé en ce que** l'axe longitudinal de ladite buse (49) forme un angle d'inclinaison $\alpha$ par rapport à l'horizontale qui se situe entre 0° et 45°, de préférence entre 0° et 30° et encore plus préférentiellement entre 5° et 20°.

8. Dispositif selon l'une quelconque des revendications précédentes, **caractérisé en ce qu'**il comprend au moins une plaque de stabilisation (48) du niveau de liquide, disposée horizontalement, verticalement ou en biais.

9. Dispositif selon l'une quelconque des revendications précédentes, **caractérisé en ce qu'**il comprend au moins un moyen (43) de détection d'un manque de liquide associé à une boucle de rétroaction pour couper ou diminuer l'intensité des ondes acoustiques émises par l'élément piézo-électrique (46) en cas de manque de liquide.

10. Dispositif selon l'une quelconque des revendications précédentes, **caractérisé en ce que** ledit tube (23) de sortie du brouillard est incurvé vers l'horizontale dans sa partie proche de sa sortie (22), et l'axe de sa sortie est de préférence horizontal.

11. Procédé de mise en route d'un dispositif selon l'une quelconque des revendications 1 à 10, dans lequel

(a) on fait entrer du liquide dans le bac (7) ;

(b) lorsque le niveau dudit liquide monte dans ledit bac (7) jusqu'à un point préréglé qui est détecté par un détecteur de niveau de liquide (39) dans le bac (7), on met en fonctionnement la pompe de circulation (42) ;

(c) la pompe de circulation (42) créé une pression de liquide suffisante pour que le liquide puisse envahir la buse (49), éventuellement après avoir envahi la chambre de mise en pression (52), et pour former un jet de liquide (53) stable qui sort de l'orifice de sortie (50), sachant que pendant au moins une partie de ce temps, on fait entrer du liquide supplémentaire dans le bac ;

(d) lorsque le niveau dudit liquide dans ledit bac (7) a atteint un point préréglé qui est détecté par un détecteur de niveau, on active l'alimentation électrique de l'élément piézo-électrique (46) pour créer des gouttelettes de liquide.

12. Procédé selon la revendication 11, dans lequel dans l'étape (d) ledit point préréglé et/ou ledit détecteur de niveau sont le(s) même(s) qu'à l'étape (b).

13. Utilisation d'un dispositif (1) selon l'une quelconque des revendications 1 à 10 sous un étal ou une table (60), notamment destiné à la présentation d'articles à la vente, ledit étal ou ladite table (60) étant équipé d'au moins un nébuliseur (10) qui diffuse à travers au moins un orifice de nébulisation (16) du brouillard généré par ledit dispositif (1).

14. Table ou étal (60) destiné à la présentation d'articles à la vente, comprenant une surface de présentation et au moins un nébuliseur (10) qui diffuse à travers au moins un orifice de nébulisation (16) du brouillard généré par un dispositif (1) de nébulisation, ladite table ou ledit étal (60) étant **caractérisé en ce qu'**il comprend :

- un dispositif (1) selon l'une des revendications 1 à 10, disposé au-dessous de sa surface de présentation,
- un tube dont une extrémité est reliée audit au moins un nébuliseur (10) et l'autre extrémité (12) est disposée de manière à pouvoir être reliée à l'embout de sortie (22) du tube (23) de sortie du brouillard dudit dispositif (1) lorsque ledit dispositif (1) se trouve en position opérationnelle sous ladite table ou ledit étal (60),
- un dispositif de fixation (11,13) permettant d'introduire ledit dispositif (1) dans sa position opérationnelle sous ledit étal ou ladite table (60), et de le retirer, par un mouvement latéral dans l'axe dudit dispositif (1).

15. Procédé de retrait d'un dispositif (1) selon l'une quelconque des revendications 1 à 10 monté en position opérationnelle sous un étal ou une table (60) notamment destiné à la présentation d'articles à la vente, ledit procédé comprenant l'étape d'un mouvement linéaire du dispositif vers l'extérieur dudit étal ou de ladite table.

**Patentansprüche**

1. Vernebelungsvorrichtung (1) von allgemein länglicher Form, vom Typ mit akustischem Ultraschallwellen-Konzentrator, welche in der Lage ist, einen Tröpfchennebel einer Flüssigkeit ausgehend von einer Flüssigkeit zu generieren, umfassend

- eine Düse (49) mit akustischem Ultraschallkonzentrator, die mit mindestens einer Flüssigkeitseinlassöffnung (51) und mit mindestens einer Flüssigkeitsauslassöffnung (50) versehen ist, und auf der entgegengesetzten Seite der Auslassöffnung (50) einem piezoelektrischen Element (46), welches in der Lage ist, akustische Wellen in die Flüssigkeit zu emittieren, und wobei der Querschnitt der Düse (49) eine zunehmende Verengung in Richtung der mindestens einen Auslassöffnung (50) aufweist, sodass in der Düse (49) die akustischen Wellen fokussiert werden, um einen Tröpfchennebel der Flüssigkeit zu erzeugen;
- eine "Umwälzpumpe" genannte Pumpe (42), die über die mindestens eine in der Düse (49) ausgestaltete Einlassöffnung (51) mit der Düse (49) verbunden ist, wobei die Umwälzpumpe (42) in der Lage ist, in der Düse (49) einen Flüssigkeitsdruck zu generieren, der ausreichend ist, um einen Flüssigkeitsstrahl (53) aufrecht zu erhalten, der über die Auslassöffnung (50) aus der Düse (49) austritt;

wobei die Vorrichtung **dadurch gekennzeichnet ist, dass** sie umfasst

- ein Untergestell (4) von länglicher Form, welches ein Wannenmodul (5) und ein Düsenmodul (9) umfasst, wobei das Wannenmodul (5) eine Wanne (7) umfasst,
- ein Elektronikgehäuse (8) von länglicher Form, das in der Projektion und vorzugsweise in der Achse des Untergestells (4) liegt und mit diesem letzteren einstückig sein oder von diesem letzteren abnehmbar sein kann, wobei das Elektronikgehäuse (8) eine Haube (3) umfasst,
- einen oberen Teil (2), der ein Rohr (23) zum Auslassen des Nebels und ein Lüftungsmittel (24) umfasst, welches in der Lage ist, einen Luftstrom durch das Rohr (23) zum Auslassen des Nebels hindurch zu generieren;
- gegebenenfalls Lüftungsmittel, um einen Luftstrom zu erzeugen, der den Tröpfchennebel durch das Rohr (23) zum Auslassen des Nebels hindurch zur Außenseite der Vorrichtung hin mitreißt;

in welcher Vorrichtung:

- das Düsenmodul die Düse (49) umfasst,
- die Pumpe (42) einerseits mit der Wanne (7) und andererseits mit der Düse (49) verbunden ist;
- der obere Teil über dem Untergestell (4) angeordnet ist, sodass sich der hintere Teil des Rohrs (23) zum Auslassen des Nebels mindestens teilweise im Inneren des Wannenmoduls befindet, und das Rohr (23) zum Auslassen des Nebels zur Vorderseite der Vorrichtung hin vorspringt.

2. Vorrichtung nach Anspruch 1, **dadurch gekennzeichnet, dass** das Elektronikgehäuse (8) hinter dem Untergestell (4) liegt, wobei zu wissen ist, dass die Bedeutung von "hinter" der Gegensatz zur Bedeutung von "vor" ist, welche ihrerseits auf die Auslassrichtung (22) des Rohrs (23) zum Auslassen des Nebels bezogen definiert ist.

3. Vorrichtung nach Anspruch 1 oder 2, **dadurch gekennzeichnet, dass** sie weiter eine Druckbeaufschlagungskammer (52) umfasst, die von der aus der Umwälzpumpe (42) austretenden Flüssigkeit vor ihrem Eintritt in die Düse (49) durchflossen wird, wobei das Volumen (V5) des oberen Teils der Druckbeaufschlagungskammer (52), das auf einem Flüssigkeitspegel liegt, welcher höher ist als der höchste der folgenden drei Punkte: die am höchsten liegende Wassereinlassöffnung (51) der Düse, die obere Kante der Auslassöffnung (50) der Düse (49), der höchste Punkt der Emitterfläche des piezoelektrischen Elements (46), mindestens zweimal (vorzugsweise mindestens sechsmal, und noch stärker bevorzugt mindestens zwölfmal) größer ist als das Volumen (V4) der Düse (49).

4. Vorrichtung (1) nach einem der Ansprüche 1 bis 3, **dadurch gekennzeichnet, dass** die Umwälzpumpe im Elektronikgehäuse (8) angeordnet ist.

5. Vorrichtung (1) nach einem der Ansprüche 1 bis 4, **dadurch gekennzeichnet, dass** die Längsachse der Düse (49) im Wesentlichen zur Achse des Rohrs (23) zum Auslassen des Nebels parallel ist.

6. Vorrichtung nach einem der vorstehenden Ansprüche, **dadurch gekennzeichnet, dass** die Summe der Flächen der Einlassöffnungen (51) höher, und vorzugsweise mindestens dreimal höher ist als der Querschnitt der Auslassöffnung (50) .

7. Vorrichtung nach einem der vorstehenden Ansprüche, **dadurch gekennzeichnet, dass** die Längsachse der Düse (49) bezogen auf die Horizontale einen Neigungswinkel $\alpha$ bildet, der zwischen 0° und 45°, vorzugsweise zwischen 0° und 30°, und noch stärker bevorzugt zwischen 5° und 20° liegt.

8. Vorrichtung nach einem der vorstehenden Ansprüche, **dadurch gekennzeichnet, dass** sie mindestens eine Platte zum Stabilisieren (48) des Flüssigkeitspegels umfasst, welche horizontal, vertikal oder schräg angeordnet ist.

9. Vorrichtung nach einem der vorstehenden Ansprüche, **dadurch gekennzeichnet, dass** sie mindestens ein Mittel (43) zum Erkennen eines Flüssigkeitsmangels umfasst, das mit einer Rückkopplungsschleife verknüpft ist, um die Intensität der vom piezoelektrischen Element (46) emittierten akustischen Wellen im Falle von Flüssigkeitsmangel zu verringern oder zu unterbrechen.

10. Vorrichtung nach einem der vorstehenden Ansprüche, **dadurch gekennzeichnet, dass** das Rohr (23) zum Auslassen des Nebels in seinem Teil nahe seines Auslasses (22) zur Horizontalen hin gekrümmt ist, und die Achse seines Auslasses vorzugsweise horizontal ist.

11. Verfahren zur Inbetriebnahme einer Vorrichtung nach einem der Ansprüche 1 bis 10, wobei

(a) man Flüssigkeit in die Wanne (7) eintreten lässt;
(b) wenn der Pegel der Flüssigkeit in der Wanne (7) bis zu einem voreingestellten Punkt ansteigt, der von einem Flüssigkeitspegeldetektor (39) in der Wanne (7) erkannt wird, man die Umwälzpumpe (42) in Betrieb setzt;
(c) die Umwälzpumpe (42) einen Flüssigkeitsdruck erzeugt, der ausreichend ist, damit die Flüssigkeit die Düse (49) einnehmen kann, gegebenenfalls nachdem sie die Druckbeaufschlagungskammer (52) eingenommen hat, und um einen stabilen Flüssigkeitsstrahl (53) zu bilden, der aus der Auslassöffnung (50) austritt, wobei zu wissen ist, dass während mindestens eines Teils dieser Zeit man zusätzliche Flüssigkeit in die Wanne eintreten lässt;
(d) wenn der Pegel der Flüssigkeit in der Wanne (7) einen voreingestellten Punkt erreicht hat, der von einem Pegeldetektor erkannt wird, man die Stromversorgung des piezoelektrischen Elements (46) aktiviert, um Flüssigkeitströpfchen zu erzeugen.

**12.** Verfahren nach Anspruch 11, wobei im Schritt (d) der voreingestellte Punkt und/oder der Pegeldetektor der-/dieselbe(n) sind wie im Schritt (b).

**13.** Verwendung einer Vorrichtung (1) nach einem der Ansprüche 1 bis 10 unter einem Stand oder einem Tisch (60), der vor allem zur Verkaufspräsentation von Artikeln vorgesehen ist, wobei der Stand oder der Tisch (60) mit mindestens einem Vernebler (10) ausgestattet ist, der durch mindestens eine Vernebelungsöffnung (16) hindurch von der Vorrichtung (1) generierten Nebel verströmt.

**14.** Tisch oder Stand (60), der für die Verkaufspräsentation von Artikeln vorgesehen ist, umfassend eine Präsentationsfläche und mindestens einen Vernebler (10), der durch mindestens eine Vernebelungsöffnung (16) hindurch von einer Vernebelungsvorrichtung (1) generierten Nebel verströmt, wobei der Tisch oder der Stand (60) **dadurch gekennzeichnet ist, dass** er umfasst:

- eine Vorrichtung (1) nach einem der Ansprüche 1 bis 10, die unter seiner Präsentationsfläche angeordnet ist,
- ein Rohr, von dem ein Ende mit dem mindestens Vernebler (10) verbunden ist und das andere Ende (12) so angeordnet ist, dass es mit dem Auslassstutzen (22) des Rohres (23) zum Auslassen des Nebels der Vorrichtung (1) verbunden werden kann, wenn sich die Vorrichtung (1) in Einsatzposition unter dem Tisch oder dem Stand (60) befindet,
- eine Befestigungsvorrichtung (11, 13), die es ermöglicht, die Vorrichtung (1) durch eine seitliche Bewegung in der Achse der Vorrichtung (1) in ihre Einsatzposition unter dem Stand oder dem Tisch (60) einzuschieben und sie herauszuziehen.

**15.** Verfahren zum Herausziehen einer Vorrichtung (1) nach einem der Ansprüche 1 bis 10, welche in Einsatzposition unter einem Stand oder einem Tisch (60) montiert ist, der vor allem zur Verkaufspräsentation vor Artikeln vorgesehen ist, wobei das Verfahren den Schritt einer linearen Bewegung der Vorrichtung zur Außenseite des Standes oder des Tisches hin umfasst.

**Claims**

**1.** Nebulising device (1) having an elongated general shape, of the ultrasonic wave acoustic concentrator type, capable of generating a liquid droplet spray from a liquid, including;

- an ultrasonic acoustic concentrator nozzle (49) provided with at least one liquid intake orifice (51) and at least one liquid discharge orifice (50), and on the opposite side of said discharge orifice (50) a piezoelectric element (46) suitable for emitting acoustic waves in said liquid, and the cross-section of said nozzle (49) exhibiting progressive narrowing in the direction of said at least one discharge orifice (50), such that in said nozzle (49) the acoustic waves are focused to create said spray of droplets of said liquid;
- a pump (42) or "circulation pump" connected to said nozzle (49) by the at least one intake orifice (51) created in said nozzle (49), said circulation pump (42) being suitable for generating in said nozzle (49) a sufficient liquid pressure to maintain a liquid jet (53) outflowing via said discharge orifice (50) of the nozzle (49);

said device being **characterised in that** it includes

- a lower frame (4) of elongated shape, including a tank module (5) and a nozzle module (9), said tank module (5) including a tank (7),
- an electronic unit (8) of elongated shape, situated in the projection and preferably in the axis of said lower frame (4) and optionally being integral therewith or being detachable therefrom, said electronic unit (8) including a cover (3),
- an upper part (2) including a spray discharge tube (23) and ventilation means (24) suitable for generating an air flow via said spray discharge tube (23);
- optionally ventilation means for creating an air flow carrying said droplet spray via said spray discharge tube (23) outside said device;

wherein:

- the nozzle module comprises said nozzle (49),
- said pump (42) is connected on one hand to the tank (7) and on the other to said nozzle (49);
- the upper part is arranged above the lower frame (4) such that the rear part of said spray discharge tube (23) is situated at least partially inside the tank module, and the spray discharge tube (23) is projected towards the front of the device.

2.  Device according to claim 1, **characterised in that** said electronic unit (8) is situated behind said lower frame (4), in the knowledge that the meaning of "behind" is opposite that of "in front of" which is in turn defined with respect to the discharge direction (22) of the spray discharge tube (23).

3.  Device according to claim 1 or 2, **characterised in that** it further comprises a pressurisation chamber (52) which is traversed by the liquid outflowing from the circulation pump (42) prior to the entry thereof into said nozzle (49), the volume (V5) of the upper part of the pressurisation chamber (52) being situated at a liquid level higher than the highest of the following three points: the highest water intake orifice (51) of the nozzle, the top edge of the discharge orifice (50) of the nozzle (49), the highest point of the emitting surface of the piezoelectric element (46), is at least two times (preferably at least six times and even more preferentially at least twelve times) greater than the volume (V4) of the nozzle (49).

4.  Device (1) according to any one of claims 1 to 3, **characterised in that** said circulation pump is arranged in said electronic unit (8).

5.  Device (1) according to any one of claims 1 to 4, **characterised in that** the longitudinal axis of said nozzle (49) is substantially parallel to the axis of said spray discharge tube (23).

6.  Device according to any one of the preceding claims, **characterised in that** the sum of the areas of the intake orifices (51) is greater, and preferably at least three times greater, than the cross-section of the discharge orifice (50).

7.  Device according to any one of the preceding claims, **characterised in that** the longitudinal axis of said nozzle (49) forms an angle of inclination $\alpha$ with respect to the horizontal which is situated between 0° and 45°, preferably between 0° and 30° and even more preferentially between 5° and 20°.

8.  Device according to any one of the preceding claims, **characterised in that** it comprises at least one liquid level stabilisation plate (48), arranged horizontally, vertically or at an angle.

9.  Device according to any one of the preceding claims, **characterised in that** it comprises at least one means (43) for detecting a lack of liquid associated with a feedback loop to cut off or reduce the intensity of the acoustic waves emitted by the piezoelectric element (46) in the event of a lack of liquid.

10. Device according to any one of the preceding claims, **characterised in that** said spray discharge tube (23) is curved towards the horizontal in the part thereof close to the discharge (22) thereof, and the axis of the discharge thereof is preferably horizontal.

11. Method for starting up a device according to any one of claims 1 to 10, wherein

> (a) liquid is allowed to enter the tank (7);
> (b) when the level of said liquid rises in said tank (7) to a preset point which is detected by a liquid level detector (39) in the tank (7), the circulation pump (42) is started up;
> (c) the circulation pump (42) creates a sufficient liquid pressure so that the liquid can flood into the nozzle (49), optionally after flooding into the pressurisation chamber (52), and to form a stable liquid jet (53) discharged from the discharge orifice (50), in the knowledge that, during at least a portion of this time, additional liquid is allowed to enter the tank;
> (d) when the level of said liquid in said tank (7) has reached a preset point which is detected by a level detector, the electrical power supply of the piezoelectric element (46) is activated to create liquid droplets.

12. Method according to claim 11, wherein, in step (d), said preset point and/or said level detector are the same as in step (b).

13. Use of a device (1) according to any one of claims 1 to 10 under a stall or a table (60), particularly intended for the display of items for sale, said stall or said table (60) being equipped with at least one nebuliser (10) diffusing via at least one nebulising orifice (16) spray generated by said device (1).

14. Table or stall (60) intended for the display of items for sale, comprising a display surface and at least one nebuliser (10) diffusing via at least one nebulising orifice (16) spray generated by a nebulising device (1), said table or said stall (60) being **characterised in that** it comprises:

- a device (1) according to one of claims 1 to 10, arranged below the display surface,
- a tube wherein one end is connected to said least nebuliser (10) and the other end (12) is arranged so as to be able to be connected to the discharge tip (22) of the spray discharge tube (23) of said device (1) when said device (1) is in the operational position under said table or said stall (60,
- an attachment device (11, 13) for introducing said device (1) into the operational position thereof under said stall or said table (60), and removing same, by a lateral movement in the axis of said device (1).

15. Method for removing a device (1) according to any one of claims 1 to 10 mounted in the operational position under a stall or a table (60) particularly intended for the display of items for sale, said method comprising the step for a linear movement of the device towards the outside of said stall or said table.

Figure 1

Figure 2a

Figure 2b

Figure 3

Figure 4a

16

15

1

60

14

44

13

Figure 5

10

60

Figure 6a

60

Figure 6b

1

Figure 6c

10

60

23

14

1

Figure 6d

12

13

11

Figure 6e

Figure 9a

Figure 9b

Figure 8

Figure 10a

3

23

1

30

44

58

Figure 10b

43    49    24    50    39    53    23

V5

52

33

34

V4

51

V3    V1

51

48

1

Figure 11

Figure 4b

$S_1 = S_2$

Figure 7

**EP 3 182 862 B1**

## RÉFÉRENCES CITÉES DANS LA DESCRIPTION

### Documents brevets cités dans la description

- EP 0691162 A